# EUROPEAN PATENT APPLICATION

(11) **EP 4 768 181 A1**
(43) Date of publication of application: **01.07.2026**
(21) Application number: 25227202.6
(22) Date of filing: 24.12.2025
(51) Int. Cl.: B24C 1/10, B24C 5/00, B24B 39/00, C21D 7/06, F01D 5/28, F01D 5/00, B24B 1/04, B23P 6/00

(54) **METHOD AND DEVICE FOR DIMENSIONAL RESTORATION OF A COMPONENT OF GAS TURBINE ENGINE VIA ULTRASONIC SHOT PEENING**

(30) Priority: 24.12.2024 US 202463738678 P
(71) Applicant: RTX Corporation, Farmington, CT 06032 (US)
(72) Inventor: RUSSELL, Jesse W., St. Johns, 48879 (US); WARNERS, Allison L., Jenison, 49428 (US); REICHELDERFER, Victoria, Manchester, 06042 (US); GASCON, Carlos, Charlotte, 48813 (US); HOLLAND, Brian K., Mason, 48854 (US); YEBO, Daniel W., South Windsor, 06074 (US); PRIHAR, Ron I., West Hartford, 06117 (US); RAILTON, Ryan S., West Hartford, 06107 (US); ROOBOL, Jonathan, Howell, 48843 (US)
(74) Representative: Dehns

(57) **Abstract**

Methods and devices are provided for performing ultrasonic shot peening (USP) on a component of an engine. A USP head unit (300) is configured for performing USP. The USP head unit (300) includes a treatment enclosure (302) containing peening media. USP is performed on the component using the USP head unit (300). The USP head unit (300) also includes a peening block (1202) coupled to the treatment enclosure (302), and a guide window (902) extending from within the treatment enclosure (302), through the peening block (1202) and to the component. Performing USP includes vibrating the peening media within the treatment enclosure (302) and the guide window (902) at an ultrasonic frequency such that the peening media impacts against the component from within the guide window (902).

## Description

### TECHNICAL FIELD

This disclosure relates generally to gas turbine engines and, more particularly, to a method for restoring dimensions of a component of the gas turbine engine.

### BACKGROUND OF THE ART

Propulsion systems for aircraft may typically include a gas turbine engine with a components that sustain damage during use. Various methods of restoring dimensions of components are known in the art. While these known methods may be suitable for their intended purposes, there is always room in the art for improvement.

### SUMMARY

In accordance with an aspect of the present disclosure, a method is provided for performing ultrasonic shot peening (USP) on a component of an engine. A USP head unit is configured for performing USP. The USP head unit includes a treatment enclosure containing peening media. USP is performed on the component using the USP head unit. The USP head unit also includes a peening block coupled to the treatment enclosure, and a guide window extending from within the treatment enclosure, through the peening block and to the component. Performing USP includes vibrating the peening media within the treatment enclosure and the guide window at an ultrasonic frequency such that the peening media impacts against the component from within the guide window.

In any of the aspects or embodiments described above and herein, the USP head unit may further include a sonotrode coupled to the treatment enclosure and configured to generate the ultrasonic frequency.

In any of the aspects or embodiments described above and herein, a saturation curve may be created to determine shot peening intensity, and it may verified that the shot peening intensity is within a predetermined range based on the saturation curve.

In any of the aspects or embodiments described above and herein, verifying the shot peening intensity may include coupling a strip block to the treatment enclosure, and coupling a strip holder to the strip block with a peening intensity strip therebetween, such that the peening intensity strip faces the treatment enclosure. USP may be performed on the peening intensity strip by vibrating the peening media within the treatment enclosure at the ultrasonic frequency such that the peening media impacts against the peening intensity strip. An arc height of the peening intensity strip may be measured. The shot peening intensity may be determined based on the arc height and the saturation curve. It may be verified that the shot peening intensity is within the predetermined range.

In any of the aspects or embodiments described above and herein, USP may be performed on the peening intensity strip and the component with a same quantity and type of the peening media.

In any of the aspects or embodiments described above and herein, one or more blend areas may be made on a surface of the component by tracing an outer diameter of the guide window to form an outline. The one or more blend areas may include damage to the surface of the component.

In any of the aspects or embodiments described above and herein, performing USP on the component may include positioning the peening block such that the guide window is aligned with the outline on the surface of the component, and performing USP at a blend area of the one or more blend areas. The positioning of the peening block and the performing of USP may be repeated at each of the one or more blend areas.

In any of the aspects or embodiments described above and herein, the peening block may be positioned such that gaps between the guide window and the surface of the component are less than a threshold.

In any of the aspects or embodiments described above and herein, the component may be fixed prior to performing USP, and the component may be released subsequent to performing USP.

In any of the aspects or embodiments described above and herein, the component may include a fan blade of the engine.

According to an aspect of the present disclosure, a USP head unit is provided for performing USP on a component of an engine. The USP head unit includes a treatment enclosure containing peening media, a peening block coupled to the treatment enclosure, and a guide window extending from within the treatment enclosure, through the peening block, and to the component. USP is performed by vibrating the peening media within the treatment enclosure and the guide window at an ultrasonic frequency such that the peening media impacts against the component from within the guide window.

In any of the aspects or embodiments described above and herein, the USP head unit may further include a sonotrode coupled to the treatment enclosure and configured to generate the ultrasonic frequency.

In any of the aspects or embodiments described above and herein, the treatment enclosure may be coupled to the sonotrode with a predetermined gap therebetween.

In any of the aspects or embodiments described above and herein, the peening block may cover an open end of the treatment enclosure.

In any of the aspects or embodiments described above and herein, the guide window may have a substantially circular profile.

In any of the aspects or embodiments described above and herein, the guide window may extend away from a surface of the peening block.

According to an aspect of the present disclosure, a method is provided for performing USP on a component of an engine. A shot peening intensity is verified using a USP head unit for performing USP. The USP head unit includes a treatment enclosure containing peening media. The USP head unit is configured with a strip block coupled to the treatment enclosure, and a strip holder coupled to the strip block with a peening intensity strip therebetween, such that the peening intensity strip faces the treatment enclosure. Verifying the shot peening intensity includes vibrating the peening media within the treatment enclosure at an ultrasonic frequency such that the peening media impacts against the peening intensity strip. USP is performed on the component using the USP head unit. The USP head unit is configured with a peening block coupled to the treatment enclosure, and a guide window extending from within the treatment enclosure, through the peening block, and to the component. Performing USP includes vibrating the peening media within the treatment enclosure and the guide window at the ultrasonic frequency such that the peening media impacts against the component.

In any of the aspects or embodiments described above and herein, verifying the shot peening intensity may further include measuring an arc height of the peening intensity strip, determining the shot peening intensity based on the arc height, and verifying that the shot peening intensity is within a predetermined range.

In any of the aspects or embodiments described above and herein, one or more blend areas may be marked on a surface of the component by tracing an outer diameter of the guide window to form an outline. The one or more blend areas may include damage to the surface of the component.

In any of the aspects or embodiments described above and herein, performing USP on the component may include positioning the peening block such that the guide window is aligned with the outline on the surface of the component, performing USP at a blend area of the one or more blend areas, and repeating the positioning of the peening block and the performing of the USP at each of the one or more blend areas.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 schematically illustrates a cutaway, side view of a gas turbine engine, in accordance with one or more embodiments of the present disclosure.
FIG. 2 is a flowchart illustrating a method for performing USP on an engine component, in accordance with one or more embodiments of the present disclosure.
FIG. 3 schematically illustrates a USP head unit for performing USP on the engine component, in accordance with one or more embodiments of the present disclosure.
FIG. 4 is a flowchart illustrating a method for creating a saturation curve to determine shot peening intensity, in accordance with one or more embodiments of the present disclosure.
FIG. 5 schematically illustrates a peening intensity strip disposed on a strip holder for the USP head unit, in accordance with one or more embodiments of the present disclosure.
FIG. 6 schematically illustrates the strip holder coupled to the USP head unit, in accordance with one or more embodiments of the present disclosure.
FIG. 7 is a flowchart illustrating a method for performing peening intensity verification, in accordance with one or more embodiments of the present disclosure.
FIG. 8 is a flowchart illustrating a method for setting up an engine component for USP, in accordance with one or more embodiments of the present disclosure.
FIG. 9 schematically illustrates a guide window for the USP head unit, in accordance with one or more embodiments of the present disclosure.
FIG. 10 schematically illustrates an outline of the guide window around a blend area of the engine component, in accordance with one or more embodiments of the present disclosure.
FIG. 11 is a flowchart illustrating a method for performing USP on the engine component, in accordance with one or more embodiments of the present disclosure.
FIG. 12 schematically illustrates a peening block coupled to the USP head unit for performing USP on the engine component, in accordance with one or more embodiments of the present disclosure.
FIG. 13 is a diagram illustrating an exemplary computer system, in accordance with one or more embodiments of the present disclosure.

### DETAILED DESCRIPTION

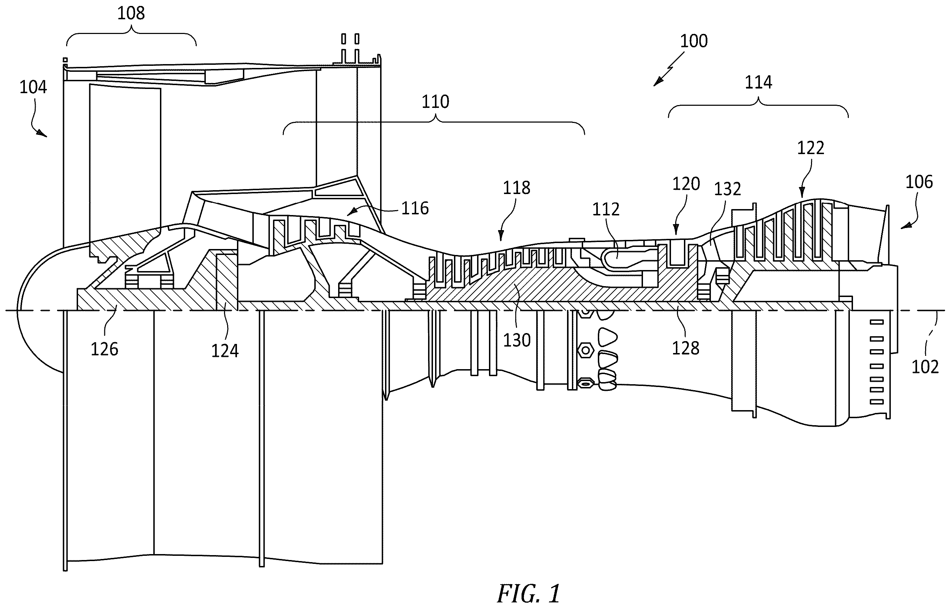

FIG. 1 schematically illustrates a cutaway, side view of a gas turbine engine 100 for a propulsion system. The present disclosure is not limited to any particular configuration of the gas turbine engine for the propulsion system, and examples of gas turbine engine configurations for the propulsion system may include, but are not limited to, a turbofan engine, a turbojet engine, a propfan engine, or the like.

The gas turbine engine 100 extends along an axial centerline 102 between an upstream airflow inlet 104 and a downstream airflow exhaust 106. The gas turbine engine 100 includes a fan section 108, a compressor section 110, a combustor section 112, and a turbine section 114. The compressor section 110 includes a low pressure compressor (LPC) 116 and a high pressure compressor (HPC) 118. The turbine section 114 includes a high pressure turbine (HPT) 120 and a low pressure turbine (LPT) 122. The engine sections are arranged sequentially along the axial centerline 102 within an engine housing. The fan section 108 is connected to a geared architecture 124, for example, through a fan shaft 126. The geared architecture 124 and the LPC 116 are connected to and driven by the LPT 122 through a low speed shaft 128. The HPC 118 is connected to and driven by the HPT 120 through a high speed shaft 130.

During operation, air enters the gas turbine engine 100 through the upstream airflow inlet 104 and is directed through the fan section 108 and into a core gas path or a bypass gas path. The air within the core gas path may be referred to as "core air". The air within the bypass gas path may be referred to as "bypass air". The core air is directed through the engine sections 110, 112, 114 and exits the gas turbine engine 100 through the downstream airflow exhaust 106 to provide forward engine thrust. Within the combustor section 112, fuel is injected into a combustion chamber and mixed with compressed core air. This fuel-core air mixture is ignited to power the gas turbine engine 100. The bypass air is directed through the bypass gas path and out of the gas turbine engine 100 through a bypass nozzle to provide additional forward engine thrust.

As shown schematically in FIG. 1, the gas turbine engine 100 also includes a stator vane assembly 132 located axially between the HPT 120 and the LPT 122 . The stator vane assembly 132 is connected to a static case such that aerodynamic loads on the stator vane assembly 132 transfer to the static case.

Given the critical role of some large components (e.g., a blade of the fan section 108) of the engine 100, maintaining their strength and durability is essential. Over time, case-hardened components (e.g., aluminum blades) can suffer localized damage from impacts (e.g., with debris or birds), which can wear way the hard outer layer and weaken the component. Traditionally, repairing such damage requires either replacing the entire component or performing labor-intensive repairs that often involve disassembling the engine 100. To address the need to quickly and precisely restore only the damaged area while preserving the remainder of the component, USP may be employed to selectively reharden the affected regions. By applying high-frequency vibrations to small beads focused solely on the damaged areas, the USP system restores the surface strength and durability of the component without disturbing the overall shape or balance, enabling fast, on-engine repairs that reduce downtime and cost.

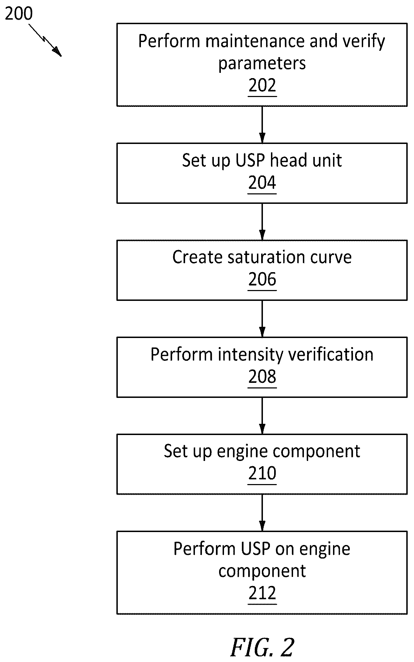

FIG. 2 is a flowchart illustrating a method 200 for performing USP on an engine component. At 202, preventative maintenance and verification of operation parameters may be performed for a USP head unit at a predetermined time interval. The present disclosure is not limited to a particular time interval. For example, the time interval may be 14 months.

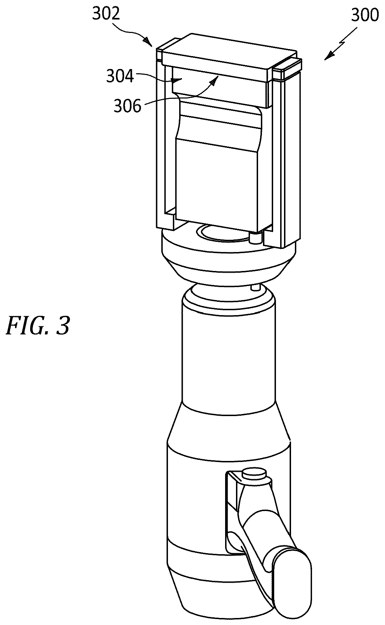

At 204, the USP head unit is set up. FIG. 3 schematically illustrates a USP head unit 300 that may be used to perform a localized USP. The USP head unit 300 includes a treatment enclosure 302. The treatment enclosure 302 may be sized and shaped to surround and confine peening media during the localized USP. A sonotrode 304 is disposed below the treatment enclosure 302 and is configured to excite the peening media inside the treatment enclosure 302 during the localized USP. The treatment enclosure 302 may be removable from the USP head unit 300 or may be fixed on the USP head unit 300. If the USP head unit 300 is removable, set up of the USP head unit 300 may including setting a gap 306 between the treatment enclosure 302 and the sonotrode 304. The present disclosure is not limited to a particular dimension of the gap 306. For example, the gap 306 may be set between 0.008 - 0.019 inch (0.203 - 0.483 mm).

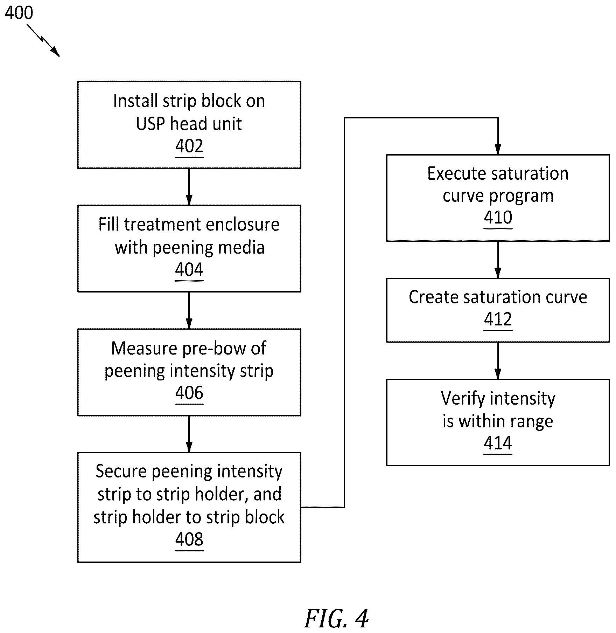

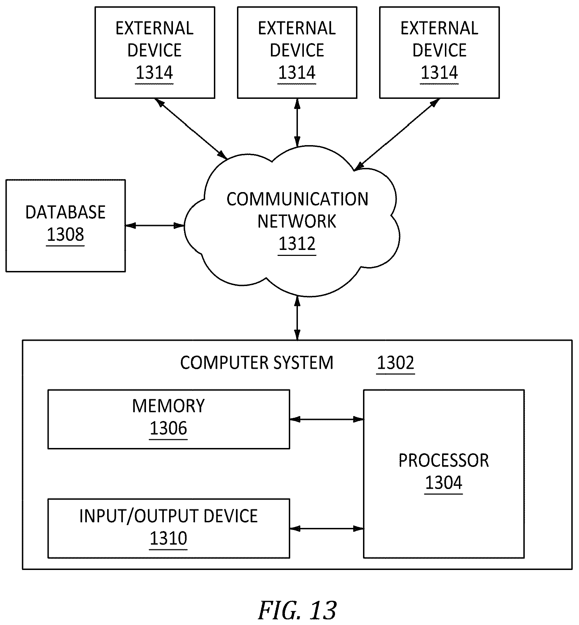

Referring back to the method 200 of FIG. 2, at 206, a controller of the USP head unit 300 (e.g., controller 1304 of FIG. 13) creates a saturation curve to determine shot peening intensity (e.g., Almen intensity). Creation of the saturation curve is described in greater detail below with respect to FIG. 4. The saturation curve may be created when the USP head unit 300 experiences certain predetermined conditions. The present disclosure is not limited to particular conditions that trigger creation of the saturation curve. For example, the conditions may include operating the USP head unit 300 after a shut down, moving to a new location, damage to any portion of the USP head unit 300, a personnel shift change, or more than a predetermined amount of time (e.g., 8 hours) since creation of the last saturation curve.

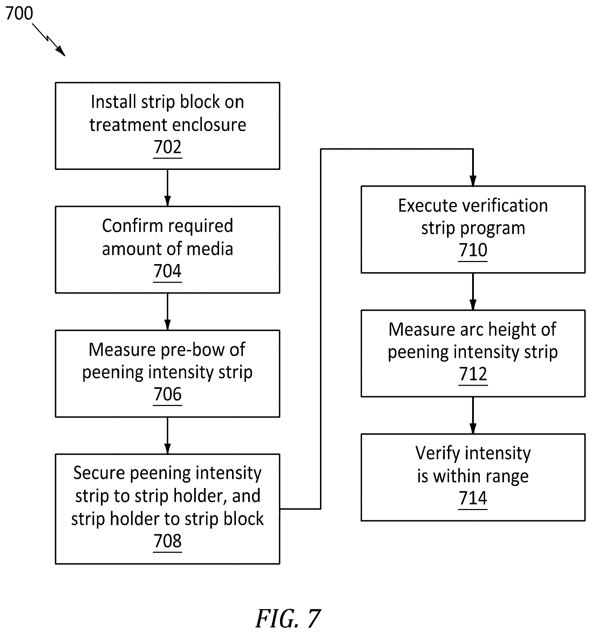

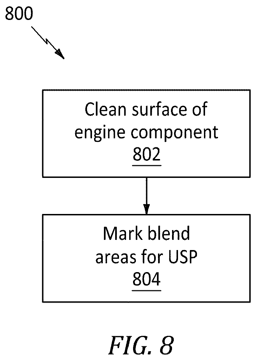

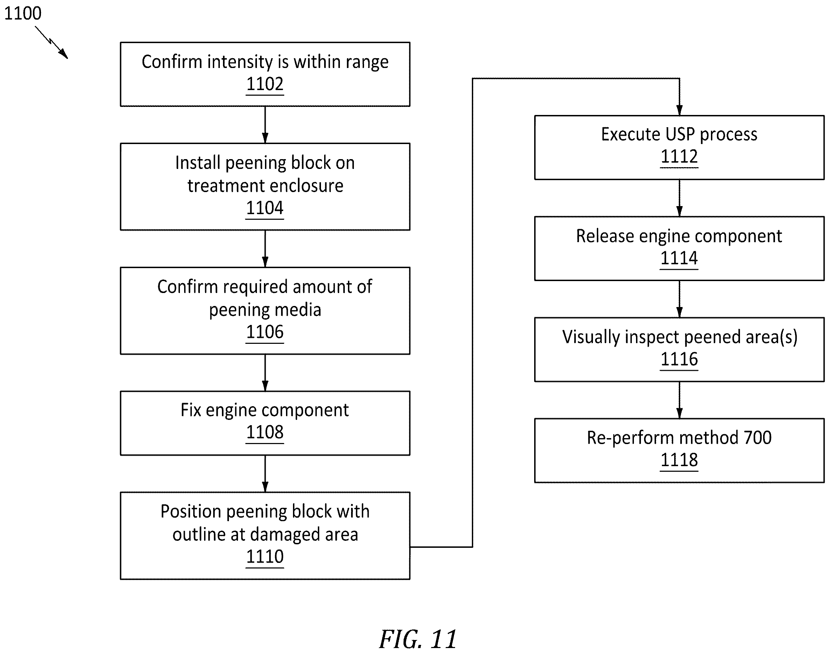

At 208, peening intensity verification is performed to verify that the peening intensity is within a predetermined range (e.g., Almen verification). Peening intensity verification is described in greater detail below with respect to FIG. 7. At 210, an engine component having one or more blend areas is set up for USP. Set up of the engine component is described in greater detail below with respect to FIG. 8. A blend area refers to an area on a surface of the engine component where damage (e.g., a dent) has occurred, requiring localized shot peening to blend or remove the surface damage. At 212, USP is performed on the one or more blend areas of engine component using the USP head unit 300. Performance of USP on the engine component is described in greater detail below with respect to FIG. 11.

FIG. 4 is a flowchart illustrating a method 400 for creating a saturation curve to determine shot peening intensity. Specifically, the method 400 is a detailed description of 206 of FIG. 2. At 402, a strip block (e.g., an Almen strip block) is installed on the treatment enclosure 302 of the USP head unit 300. The present disclosure is not limited to a particular manner of coupling the strip block and the treatment enclosure 302. At 404, the treatment enclosure 302 is filled with peening media. The present disclosure is not limited to a particular type or size of peening media. For example, the peening media may be 7.2 +/- 0.72 grams of ceramic high density media sized at 1.0-1.2 mm (0.038-0.047 inch). All of the peening media may come from a same batch number. At 406, a pre-bow of a peening intensity strip (e.g., an Almen strip) is measured (e.g., in inches) using a gage, and then recorded. The pre-bow of the peening intensity strip may not exceed a certain threshold. The present disclosure is not limited to a particular threshold. For example, the pre-bow of the peening intensity strip may not exceed +/- 0.0005 inch (0.0127 mm).

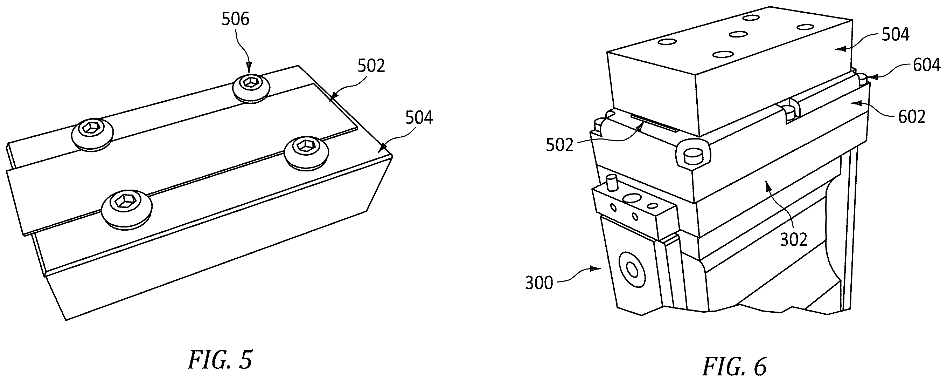

At 408, the peening intensity strip (e.g., an Almen strip) is secured to a strip holder (e.g., an Almen strip holder) and coupled to the strip block. FIG. 5 schematically illustrates a peening intensity strip 502 coupled to a strip holder 504. The peening intensity strip 502 may be coupled to the strip holder 504 by a plurality of fasteners 506. However, the present disclosure is not limited to a particular manner of coupling the peening intensity strip 502 to the strip holder 504. FIG. 6 schematically illustrates the strip holder 504 coupled to the USP head unit 300. As described with respect to 402, a strip block 602 is coupled to the treatment enclosure 302 via fasteners 604. The strip holder 504 is coupled to the strip block 602 with the peening intensity strip 502 therebetween. Accordingly, the peening intensity strip 502 faces the treatment enclosure 302. The present disclosure is not limited to a particular manner of coupling the strip holder 504 to the strip block 602.

Referring back to method 400 of FIG. 4, at 410, the controller of the USP head unit 300 (e.g., the controller 1304 of FIG. 13) executes a saturation curve program. The saturation curve program may be executed in multiple sequences (e.g., four sequences) with a set of exposure times (e.g., 60 seconds (sec), 120 sec, 240 sec, and 480 sec). Accordingly, the saturation curve program may perform USP on multiple peening intensity strips (e.g., four Almen strips), each with a different exposure time, for example. During USP, the peening media in the treatment enclosure 302 is vibrated with an ultrasonic frequency from the sonotrode 304, such that the peening media impacts the coupled peening intensity strip. After each sequence, an arc height of the peened strip is measured using a gage, recorded, and then discarded. The present disclosure is not limited to a particular method of measuring the arc height. The methodology repeats 406-410 until all of the peening intensity strips have been subject to USP, based on the number of sequences and exposure times. The present disclosure is not limited a particular number of sequences or particular exposure times.

At 412, the controller of the USP head unit 300 (e.g., the controller 1304 of FIG. 13) creates a saturation curve to determine the type 1 (T1) time, using the arc height measurements and exposure times from 410. The saturation curve accounts for the pre-bow measurement determined at 406. At 414, the controller verifies that the calculated intensity from the saturation curve is within a predetermined range. The present disclosure is not limited to a particular range. For example, the predetermined range may be 6N to 9N (e.g., 0.006 to 0.009 inch (0.152-0.229 mm)), inclusive. The peening media may remain in the treatment enclosure 302 and may be used for subsequent peening intensity verification at 208 of FIG. 2.

FIG. 7 is a flowchart illustrating a method 700 for performing peening intensity verification (e.g., Almen verification). Specifically, the method 700 is a detailed description of 208 of FIG. 2. At 702, the strip block 602 is installed on the treatment enclosure 302. At 704, the required amount of peening media within the treatment enclosure 302 is confirmed. For example, if no peening media is present or if some peening media has been lost, any remaining peening media is removed and discarded, before filling the treatment enclosure 302 with the required amount of peening media (e.g., 7.2 +/- 0.72 grams of media). If the peening media does not come from the same batch number as that used in 404 of FIG. 4, the method 400 of FIG. 4 is reperformed.

At 706, a pre-bow of a peening intensity strip is measured (e.g., in inches) using a gage, and then recorded. The pre-bow of the peening intensity strip may not exceed a certain threshold. The present disclosure is not limited to a particular threshold. For example, the pre-bow of the peening intensity strip may not exceed +/- 0.0005 inch (0.0127 mm). At 708, the peening intensity strip is secured to the strip holder 504, and the strip holder is coupled to the strip block 602, as described above with respect to 408 of FIG. 4. Accordingly, the peening intensity strip 502 faces toward the treatment enclosure 302.

At 710, the controller of the USP head unit 300 (e.g., the controller 1304 of FIG. 13) executes a peening intensity verification program. The program may execute and perform USP on the peening intensity strip for an exposure time of T1, which may be updated to the most recently produced time at 412 of FIG. 4. During USP, the peening media in the treatment enclosure 302 is vibrated with an ultrasonic frequency from the sonotrode 304, such that the peening media impacts the coupled peening intensity strip. At 712, an arc height of the peening intensity strip is measured using the gage, and then recorded. The present disclosure is not limited to a particular method of measuring the arc height. At 714, the controller verifies whether the peening intensity is within the predetermined range (e.g., 6N to 9N, inclusive). The pre-bow measurement of 706 is accounted for in this verification. If the peening intensity is outside of the predetermined range, the method 700 is repeated.

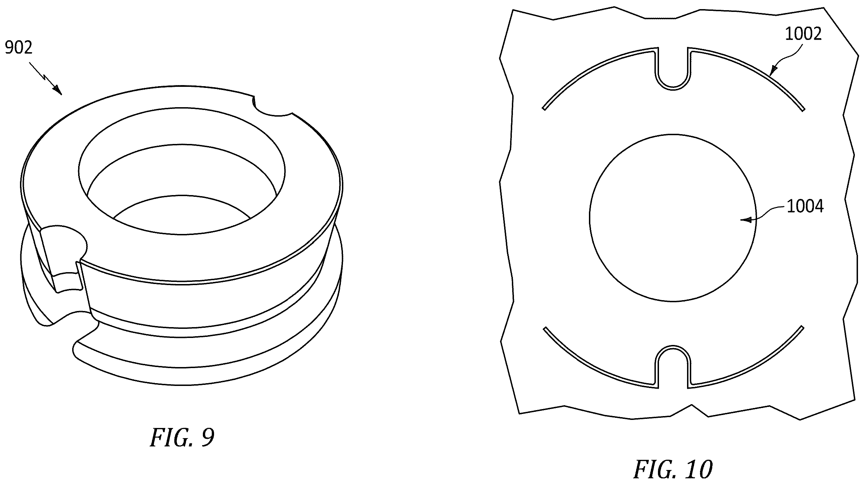

FIG. 8 is a flowchart illustrating a method 800 for setting up an engine component for USP. Specifically, the method 800 is a detailed description of 210 of FIG. 2. At 802, a surface of the engine component is cleaned using a predetermined cleaning agent (e.g., acetone or isopropyl alcohol) and a predetermined cleaning technique. The present disclosure is not limited to a particular method of cleaning the surface of the engine component. At 804, the one or more blend areas may be marked by tracing an outer diameter of a guide window such that each blend area is within the center of a respective outline. The present disclosure is not limited to a particular shape or profile for the guide window. For example, the guide window may have a substantially circular profile. FIG. 9 schematically illustrates a guide window 902, and FIG. 10 schematically illustrates an outline 1002 of the guide window 902 on a surface of the component around a blend area 1004.

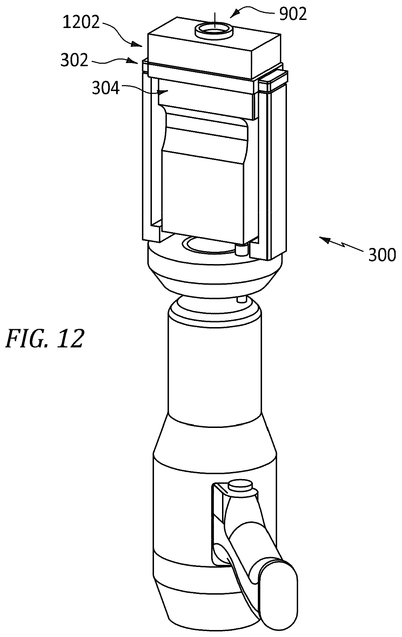

FIG. 11 is a flowchart illustrating a method 1100 for performing USP on the engine component. Specifically, the method 1100 is a detailed description of 212 of FIG. 2. At 1102, the controller of the USP head unit 300 (e.g., the controller 1304 of FIG. 13) confirms that the peening intensity is within the predetermined range. At 1104, a peening block is coupled to the treatment enclosure 302. The peening block covers an open end of the treatment enclosure 302. The present disclosure is not limited to a particular manner of coupling the peening block and the treatment enclosure 302. For example, the peening block and the treatment enclosure 302 may be coupled by tightening mounting screws (without over tightening). FIG. 12 schematically illustrates the USP head unit 300 having a peening block 1202 coupled to the treatment enclosure 302. The guide window 902 extends from within the treatment enclosure and through the peening block 1202. The guide window 902 may be positioned at the outline 1002 around the blend area 1004 of FIG. 10.

Referring back to the method 1100 of FIG. 11, at 1106, the required amount of peening media within the treatment enclosure 302 is confirmed. If peening media has been lost, any remaining peening media is removed and discarded, before filling the treatment enclosure 302 with the required amount of peening media, as described above. At 1108, the engine component is fixed to remain stationary during the USP process. At 1110, the guide window 902 of the peening block 1202 is positioned to align with the outline 1002 on the surface of the engine component. Gaps between the guide window 902 and the surface of the engine component may be checked using a feeler gage, for example. Gaps larger than the feeler gage may not permitted, and the peening block 1202 and/or the engine component may be adjusted to eliminate the gap. The present disclosure is not limited to a particular gap threshold. For example, the gap threshold may be 0.020 inch (0.508 mm).

At 1112, the USP process is executed for the engine component. The USP process may peen the surface of the engine component by vibrating the peening media in the treatment enclosure 302 and the guide window 902 with an ultrasonic frequency from the sonotrode 304, such that the peening media within the guide window 902 impacts the surface of the engine component at the blend area 1004. If the engine component has multiple blend areas 1004, the method may repeat 1110 and 1112 for each area, to reposition the peening block 1202 and/or the engine component and perform the USP process until all blend areas have been subjected to USP. Peening media may (or may not) be reused at some or all blend areas on a single engine component.

After all blend areas have been peened, at 1114, the surface of the engine component is released and cleaned to remove the outline(s) 1002. The present disclosure is not limited to a particular manner of cleaning the engine component. At 1116, the peened areas are visually inspected (e.g., magnified visual inspection) to determine coverage. A minimum percentage coverage may be required over all blend areas. The present disclosure is not limited to a particular minimum percentage. For example, the minimum percentage may be 98%. At 1118, the peening intensity verification method 700 of FIG. 7 is reperformed. If peening intensity is greater than an upper limit of the predetermined range or lower than a lower limit of the predetermined range, the verification may be reperformed. If the peening intensity remains below the lower limit, the saturation curve creation method 400 of FIG. 4 is reperformed. Peening media is also discarded so as not be reused for different engine components.

FIG. 13 is a diagram illustrating an exemplary computer system 1302. The computer system 1302 may be configured to implement one or more aspects of the present disclosure, however, the present disclosure is not limited to this particular computer system embodiment. The computer system 1302 includes at least one controller 1304 in signal communication with a memory 1306. The at least one controller 1304 may be any type of computing device, computational circuit, or processing circuit capable of executing a series of instructions that are stored in the memory 1306. The at least one controller 1304 may include multiple controllers, processor, and/or multicore central processing units (CPUs) and may include any type of processor, such as a microprocessor, digital signal processor, co-processors, a microcontroller, a microcomputer, a central processing unit, a field programmable gate array, a programmable logic device, a state machine, logic circuitry, analog circuitry, digital circuitry, etc., and any combination thereof. The instructions stored in the memory 1306 may represent one or more algorithms for controlling the aspects of the computer system 1302, and the stored instructions are not limited to any particular form (e.g., program files, system data, buffers, drivers, utilities, system programs, etc.) provided they can be executed by the at least one controller 1304. The memory 1306 may be a non-transitory computer readable storage medium configured to store instructions that when executed by the at least one controller 1304, cause the at least one controller 1304 to perform or cause the performance of certain functions. The memory 1306 may be a single memory device or a plurality of memory devices. A memory device may include a storage area network, network attached storage, as well as a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the computer system 1302 may be achieved by the use of hardware, software, firmware, or any combination thereof.

In various embodiments, the computer system 1302 may include a database 1308 in signal communication with the at least one controller 1304. In various embodiments, the database 1308 may be located external to the computer system 1302 and in signal communication with the computer system 1302 via any wired or wireless protocol. In various embodiments, the computer system 1302 may also include input (e.g., a keyboard, a touch screen, etc.) and output devices (e.g., a monitor, sensor readouts, data ports, etc.) (hereinafter input/output device 1310), in signal communication with the at least one controller 1304, that enable a user to input instructions, receive data, etc.

The computer system 1302 may be connected to a communication network 1312. The communication network 1312 may include any suitable electronic communication network or combination of electronic communication networks including, but not limited to, wired and/or wireless local area networks, internet-based networks, cloud-based storage and communication networks, and the like. The communication network 1312 may allow remote electronic communications between the computer system 1302 and one or more devices such as the database 1308 and/or one or more external devices 1314 including, for example, other computer workstations having field inspector user interfaces.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for performing ultrasonic shot peening (USP) on a component of an engine, the method comprising:
configuring a USP head unit (300) for performing USP, wherein the USP head unit (300) comprises a treatment enclosure (302) containing peening media; and
performing USP on the component using the USP head unit (300), wherein the USP head unit (300) further comprises a peening block (1202) coupled to the treatment enclosure (302), and a guide window (902) extending from within the treatment enclosure (302), through the peening block (1202) and to the component, and wherein performing USP comprises:
vibrating the peening media within the treatment enclosure (302) and the guide window (902) at an ultrasonic frequency such that the peening media impacts against the component from within the guide window (902).

2. The method of claim 1, wherein the USP head unit (300) further comprises a sonotrode (304) coupled to the treatment enclosure (302) and configured to generate the ultrasonic frequency.

3. The method of claim 1 or 2, further comprising:
creating a saturation curve to determine shot peening intensity; and
verifying the shot peening intensity is within a predetermined range based on the saturation curve.

4. The method of claim 3, wherein verifying the shot peening intensity comprises:
coupling a strip block (602) to the treatment enclosure (302);
coupling a strip holder (504) to the strip block (602) with a peening intensity strip (502) therebetween, such that the peening intensity strip (502) faces the treatment enclosure (302);
performing USP on the peening intensity strip (502) by vibrating the peening media within the treatment enclosure (302) at the ultrasonic frequency such that the peening media impacts against the peening intensity strip (502);
measuring an arc height of the peening intensity strip (502);
determining the shot peening intensity based on the arc height and the saturation curve; and
verifying that the shot peening intensity is within the predetermined range.

5. The method of claim 4, wherein USP is performed on the peening intensity strip (502) and the component with a same quantity and type of the peening media.

6. The method of any preceding claim, further comprising:
marking one or more blend areas (1004) on a surface of the component by tracing an outer diameter of the guide window (902) to form an outline (1002), wherein the one or more blend areas (1004) comprise damage to the surface of the component.

7. The method of claim 6, wherein performing USP on the component comprises:
positioning the peening block (1202) such that the guide window (902) is aligned with the outline (1002) on the surface of the component;
performing USP at a blend area (1004) of the one or more blend areas (1004); and
repeating the positioning of the peening block (1202) and the performing of USP at each of the one or more blend areas (1004).

8. The method of claim 7, wherein the peening block (1202) is positioned such that gaps between the guide window (902) and the surface of the component are less than a threshold.

9. The method of any preceding claim, further comprising:
fixing the component prior to performing USP; and
releasing the component subsequent to performing USP.

10. The method of any preceding claim, wherein the component comprises a fan blade of the engine (100).

11. An ultrasonic shot peening (USP) head unit (300) for performing USP on a component of an engine (100), the USP head unit (300) comprising:
a treatment enclosure (302) containing peening media;
a peening block (1202) coupled to the treatment enclosure (302); and
a guide window (902) extending from within the treatment enclosure (302), through the peening block (1202), and to the component, wherein USP is performed by vibrating the peening media within the treatment enclosure (302) and the guide window (902) at an ultrasonic frequency such that the peening media impacts against the component from within the guide window (902).

12. The USP head unit (300) of claim 11, further comprising a sonotrode (304) coupled to the treatment enclosure (302) and configured to generate the ultrasonic frequency,
wherein, optionally, the treatment enclosure (302) is coupled to the sonotrode (304) with a predetermined gap (306) therebetween.

13. The USP head unit (300) of claim 11 or 12, wherein the peening block (1202) covers an open end of the treatment enclosure (302).

14. The USP head unit (300) of claim 11, 12 or 13, wherein:
the guide window (902) has a substantially circular profile; and/or
the guide window (902) extends away from a surface of the peening block (1202).

15. A method for performing ultrasonic shot peening (USP) on a component of an engine, the method comprising:
verifying a shot peening intensity using a USP head unit (300) for performing USP, wherein the USP head unit (300) comprises a treatment enclosure (302) containing peening media, and the USP head unit (300) is configured with a strip block (602) coupled to the treatment enclosure (302), and a strip holder (504) coupled to the strip block (602) with a peening intensity strip (502) therebetween, such that the peening intensity strip (502) faces the treatment enclosure (302), and wherein verifying the shot peening intensity comprises:
vibrating the peening media within the treatment enclosure (302) at an ultrasonic frequency such that the peening media impacts against the peening intensity strip (502); and
performing USP on the component using the USP head unit (300), wherein the USP head unit (300) is configured with a peening block (1202) coupled to the treatment enclosure (302), and a guide window (902) extending from within the treatment enclosure (302), through the peening block (1202), and to the component, and wherein performing USP comprises:
vibrating the peening media within the treatment enclosure (302) and the guide window (902) at the ultrasonic frequency such that the peening media impacts against the component, wherein, optionally:
verifying the shot peening intensity further comprises measuring an arc height of the peening intensity strip (502), determining the shot peening intensity based on the arc height, and verifying that the shot peening intensity is within a predetermined range; and/or
the method further comprises marking one or more blend areas (1004) on a surface of the component by tracing an outer diameter of the guide window (902) to form an outline (1002), wherein the one or more blend areas (1004) comprise damage to the surface of the component, wherein, further optionally, performing USP on the component comprises:
positioning the peening block (1202) such that the guide window (902) is aligned with the outline (1002) on the surface of the component;
performing USP at a blend area (1004) of the one or more blend areas (1004); and
repeating the positioning of the peening block (1202) and the performing of the USP at each of the one or more blend areas (1004).
